# EUROPÄISCHE PATENTSCHRIFT

(11) **EP 2 466 137 B1**
(45) Veröffentlichungstag und Bekanntmachung des Hinweises auf die Patenterteilung: **19.03.2014**
(21) Anmeldenummer: 11188472.2
(22) Anmeldetag: 09.11.2011
(51) Int. Cl.: F04B 39/08, F04B 39/10, F04B 49/24, F16K 15/08

(54) **Saugventil mit Abhebegreifer**
Suction valve with removal gripper
Soupape d'aspiration dotée d'une griffe de levage

(30) Priorität: 15.12.2010 AT 20742010
(43) Veröffentlichungstag der Anmeldung: 20.06.2012
(73) Patentinhaber: Hoerbiger Kompressortechnik Holding GmbH, 1220 Wien (AT)
(72) Erfinder: Lagler, Martin, 1220 Wien (AT); Stiegelmar, Gerhard, 7122 Gols (AT)
(74) Vertreter: Weiss, Christian

(56) Entgegenhaltungen:
- EP-A1- 1 936 194
- EP-A2- 1 939 451
- US-A- 4 869 289
- US-A- 5 642 753

## Beschreibung

Die gegenständliche Erfindung betrifft ein Saugventil mit einem Ventilsitz und einem Ventilfänger, zwischen denen ein Ventilelement hin- und herbeweglich angeordnet ist, und mit einem Abhebegreifer mit einer Anzahl von Abhebegreiferfingern, die durch Durchgangskanäle im Ventilsitz durchgreifen und am Ventilelement anliegen, wobei der Abhebegreifer mittels einer Abhebegreiferverdrehsicherung gegenüber dem Ventilsitz verdrehgesichert angeordnet und in axialer Richtung geführt ist.

Saugventile von Verdichtern bzw. Kompressoren sind häufig mit Abhebgreifen ausgeführt. Diese dienen im Wesentlichen, wie hinlänglich bekannt, dazu, den Kompressor lastlos hochzufahren bzw. den Kompressor auf Leerlaufbetrieb zu schalten oder den Kompressor zu regeln.

Um speziell bei trocken laufenden Kompressoren den Verschleiß des Abhebegreifers an der Führung zu verhindern werden bereits seit Jahren Führungsbänder und Führungsringe in den Greiferführungen verwendet, wie z.B. in der EP 686 770 A2 oder der DE 44 31 512 A1 gezeigt. Zusätzlich kann die Verdrehung des Abhebegreifers durch die Verwendung von Anlaufblöcken aus Kunststoff begrenzt werden. Dabei werden diese Anlaufböcke mittels Schrauben, vorzugsweise radial innen, zwischen benachbarten Greiferfingern am Ventilsitz angeschraubt. Im Fall, dass auf eine Greiferverdrehsicherung verzichtet wird, würden die Greiferfinger durch die Verdrehung des Abhebegreifers an den Stegen der Durchgangsöffnungen am Ventilsitz reiben und könnten aufgrund des dadurch auftretenden hohen Verschleißes eine Schädigung des Ventils und/oder des Abhebegreifers selbst verursachen. Aufgrund der geometrischen Vielfalt der Ventilausführungen müssen diese Anlaufblöcke allerdings für jedes Ventil aufwendig maßgeschneidert und in kleinen Stückzahlen beschafft und gelagert werden. Die damit verursachten Kosten sind entsprechend hoch. Außerdem können die Anlaufböcke, insbesondere bei kleineren Ventilen, die Strömungsverhältnisse im Ventil negativ beeinflussen.

Aus der EP 1 936 194 A1 ist bereits eine Abhebegreiferverdrehsicherung bekannt, die die oben genannten Nachteile behebt. Dabei wird am Ventilsitz eine verdrehgesichert und konzentrisch angeordnete Verdrehsicherungshülse mit einem nicht kreisrundförmigen Querschnitt vorgesehen, auf der der Abhebegreifer mit einem entsprechend gegengleich geformten zentralen Abschnitt angeordnet wird. Durch den nicht kreisrundförmigen Querschnitt der Verdrehsicherungshülse wird ein Verdrehen des Abhebengreifers gegenüber dem Ventilsitz verhindert. Die Verdrehsicherungshülse übernimmt dabei gleichzeitig auch die Führungsfunktion des Abhebegreifers. Diese Abhebegreiferverdrehsicherung hat aber den Nachteil, dass zum Einen die axiale Länge des Ventils durch die Verdrehsicherungshülse vergrößert wird, was den Einsatz insbesondere bei geregelten Ventilen bzw. Abhebegreifern unmöglich macht. Durch die vergrößerte Baulänge wird in der Regel auch ein Nachrüsten bestehender Ventile verhindert. Ist ein Nachrüsten aufgrund des verfügbaren Bauraumes trotzdem möglich, muss jedoch der gesamte Abhebegreifer ausgetauscht werden und zusätzlich auch der Ventilsitz nachbearbeitet werden, was in vielen Fällen ein Nachrüsten aus praktischer Sicht uninteressant macht. Zum Anderen erfordert diese Abhebegreiferverdrehsicherung für eine sichere und dauerhafte Funktion eine Bearbeitung des Ventilsitzes, was die Produktionskosten für ein solches Ventil erhöht.

Aufgabe der gegenständlichen Erfindung ist es daher eine Abhebegreiferverdrehsicherung für einen Abhebegreifer eines Saugventils anzugeben, die kompakt ist, einfach aufgebaut und herstellbar ist und die ein Nachrüsten bestehender Ventil auf einfache Weise ermöglicht.

Diese Aufgabe wird erfindungsgemäß dadurch gelöst, indem die Abhebegreiferverdrehsicherung als Verdrehsicherungsscheibe ausgeführt ist, an der eine zentrale Ausnehmung mit einem zur Ventilmutter gegengleichen Querschnitt vorgesehen ist und die Verdrehsicherungsscheibe mit ihrer zentralen Ausnehmung verdrehgesichert auf der Ventilmutter angeordnet ist und gleichzeitig die Außenkontur der Verdrehsicherungsscheibe einen nicht kreisrunden Querschnitt aufweist und am Abhebegreifer eine zentrale Ausnehmung mit einer zur Außenkontur gegengleichen, nicht kreisrunden Innenkontur vorgesehen ist und der Abhebegreifer mit seiner zentralen Ausnehmung auf der Verdrehsicherungsscheibe angeordnet ist. Durch eine solche Verdrehsicherung erreicht man eine besonders kompakte Anordnung, da die Verdrehsicherungsscheibe mit sehr geringer axialer Länge ausgeführt werden kann. Zudem muss gegebenenfalls nur ein Teil des Abhebegreifers nachgearbeitet werden und hier nur der Querschnitt der zentralen Ausnehmung des Abhebegreifers an die Außenkontur der Verdrehsicherungsscheibe angepasst werden. Der Abhebegreifer muss dazu nicht getauscht werden, sondern kann wiederverwendet werden. Das ermöglicht auch ein sehr einfaches Nachrüsten bestehender Ventile. Weiters müssen nur mehr eine begrenzte Anzahl von verschiedenen Verdrehsicherungsscheiben vorhanden sein, um die erfindungsgemäße Verdrehsicherung für verschiedenste Ventile einsetzen zu können. Außerdem werden mit einer erfindungsgemäßen Verdrehsicherung des Abhebegreifers die Strömungsverhältnisse im Ventil nicht mehr negativ beeinflusst.

Wenn am Abhebegreifer ein Führungsabschnitt vorgesehen ist und der Abhebegreifer mit dem Führungsabschnitt an einer Führungshülse geführt ist, kann die bisherige Führung des Abhebegreifers erhalten bleiben und es wird durch die Verdrehsicherung eine zusätzliche Führung geschaffen. Durch diese doppelte Führung wird eine Pendelbewegung des Abhebegreifers zumindest reduziert, womit auch der Verschleiß am Ventilelement (der Abhebegreiferfinger und/oder des Ventilelements) verringert werden kann.

Wenn im Abhebegreifer eine Feder vorgesehen ist, die mit einem Ende an der Verdrehsicherungsscheibe und mit dem anderen Ende an einem Anschlag im Abhebegreifer anliegt, wird eine Sicherung der Ventilmutter gegen Aufdrehen geschaffen. Außerdem muss dadurch die Verdrehsicherung im Ventil nicht eigens befestigt werden, da das die Feder übernimmt.

Die gegenständliche Erfindung wird im Nachfolgenden anhand der schematischen, nicht einschränkenden Figuren 1 bis 3, die jeweils ein bevorzugtes Ausführungsbeispiel der Erfindung zeigen, beschrieben. Dabei zeigt
Fig. 1 einen Schnitt durch ein erfindungsgemäßes Saugventil mit einem Abhebegreifer,
Fig. 2 eine Explosionsdarstellung dieses Saugventils und
Fig. 3 eine erfindungsgemäße Verdrehsicherungsscheibe.

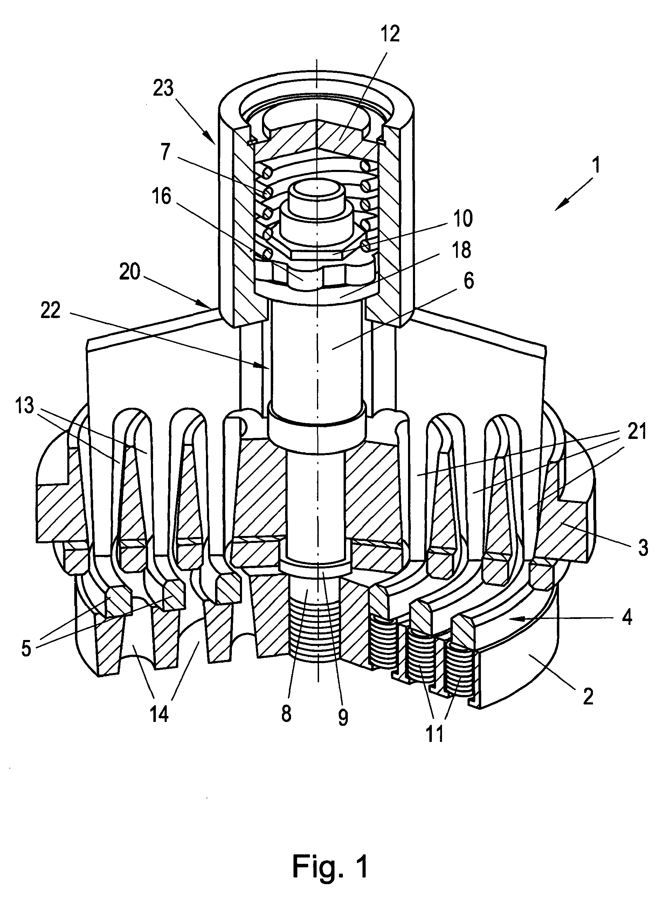

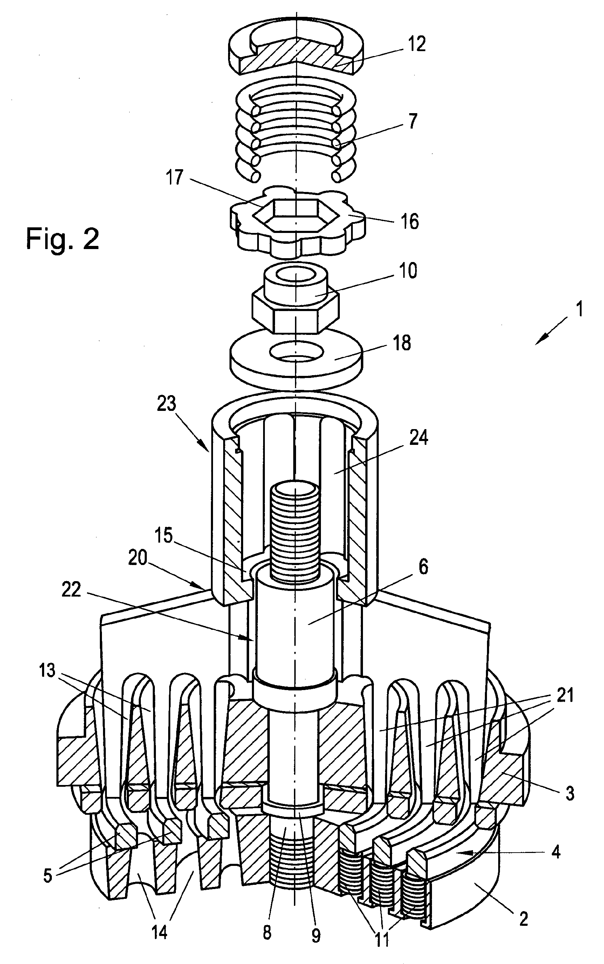

Der grundsätzliche Aufbau eines Saugventils 1 ist hinlänglich bekannt, weshalb hier nur kurz unter Bezugnahme auf die Figs. 1 und 2 darauf eingegangen wird. Ein Saugventil 1, z.B. für den Einsatz in Verdichtern, besteht aus einem Ventilsitz 3 und einem Ventilfänger 2. Dazwischen ist ein Ventilelement 4 angeordnet, das zwischen Ventilsitz 3 und Ventilfänger 2 hin- und herbewegt wird und im Zusammenwirken mit dem Ventilsitz 3 die Dichtungsfunktion übernimmt, indem es die ringförmigen Durchgangskanäle 13 im Ventilsitz 3 verschließt und freigibt. Die einzelnen Teile des Saugventils 1 werden durch einen durchgehenden Bolzen 8, der in den Ventilfänger 2 geschraubt wird, und einer gegenüberliegenden Ventilmutter 10 zusammengehalten. Der Abstand zwischen Ventilsitz 3 und Ventilfänger 2, und somit der mögliche Ventilhub, wird durch eine dazwischen liegende Distanzscheibe 9, die am Bolzen 8 angeordnet ist, eingestellt. Im Ventilfänger 2 sind weiters ringförmige Durchströmkanäle 14 angeordnet.

Am dem Ventilelement 4 abgewandten Ende des Bolzens 8 ist ein Abhebegreifer 20 angeordnet, dessen Abhebegreiferfinger 21 durch die Durchgangskanäle 13 des Ventilsitzes 3 hindurch greifen und am Ventilelement 4 anliegen. Der Abhebegreifer 20 ist mit einem Führungsabschnitt 22 auf eine Führungshülse 6 geschoben, die am Bolzen 8 angeordnet ist und ist damit axial verschiebbar angeordnet. Die Führungshülse 6 überträgt dabei auch die Schraubenvorspannkraft auf den Ventilsitz 3, um das Saugventil 1 zusammen zu halten. Der Abhebegreifer 20 wird von der Ventilmutter 10 und einer Scheibe 18, die an einer radial innen liegenden Schulter 15 am Abhebegreifer 20 anliegt, gehalten. Die Ventilmutter 10 könnte auch direkt an der Schulter 15 anliegen,

Das Ventilelement 4 kann im einfachsten Fall eine hinlänglich bekannte Ventilplatte sein, oder umfasst, wie im dargestellten Beispiel konzentrisch angeordnete Dichtringe 5, die mit dem Ventilsitz 3 dichtend zusammenwirken. Dazu sind an den Dichtringen 5 und am Ventilsitz 3 jeweils zugeordnete und zusammenwirkende Dichtflächen angeordnet. Die Dichtflächen an den Dichtringen 5 können zum Beispiel eben sein (also in einer Normalebene der Achse des Saugventils 1 liegen), die Dichtringe 5 können als Dichtflächen aber auch abgeschrägte Kanten aufweisen (wie in Fig.1) oder die Dichtringe 5 könnten auch torisch ausgebildete Dichtflächen aufweisen. Grundsätzlich sind aber auch andere beliebig geformte Dichtflächen möglich. Die entsprechend zugeordneten Dichtflächen am Ventilsitz 3 sind dabei auf jeden Fall ebenfalls entsprechend gegengleich geformt.

Das Ventilelement 4 kann auch eine (nicht dargestellte) Synchronplatte umfassen, die an den dem Ventilsitz 3 gegenüberliegenden Seiten der Dichtringe 5 angeordnet ist und die Dichtringe 5 überdeckt. Zwischen der Synchronplatte und den Dichtringen 5 kann weiters eine (nicht dargestellte) metallische Trennplatte angeordnet sein, die verhindert, dass sich die Synchronplatte und die Dichtringe 5 direkt berühren und sich somit gegenseitig verschleißen könnten. Die Trennplatte kann z.B. als dünne ebene Metallscheibe ausgeführt sein, könnte aber auch beliebig anders (entsprechend der Form der Synchronplatte und/oder der Dichtringe 5) geformt sein, z.B. gekrümmt sein. In der Synchronplatte und in der Trennplatte sind natürlich wieder eine Reihe von, bevorzugt ringförmigen (eigentlich eine Reihe von Kreisringabschnitten, die durch Radialstege getrennt werden), Durchströmöffnungen angeordnet, damit das gasförmige Medium möglichst verlustlos durch das Saugventil 1 durchtreten kann. Die Synchronplatte, die Trennplatte und die Dichtringe 5 würden dann auch gemeinsam das Ventilelement 4 des Saugventils 1 bilden und würden lose aneinanderliegen und werden während der Ringöffnungsbewegung gemeinsam bewegt werden. Durch die Trennung von Synchronplatte und Dichtringen 5 durch die Trennplatte könnten sich diese durch die ständige Bewegung des Ventilelements 4 nicht mehr gegenseitig verschleißen. Selbstverständlich kann das Ventilelement 4 auch anders ausgeführt sein, z.B. ohne Trennplatte und/oder ohne Synchronplatte oder mit einer Dichtplatte anstelle einzelner Dichtringe 5, was für die gegenständliche Erfindung nebensächlich ist.

Das Ventilelement 4, hier die Dichtringe 5, wird durch eine Reihe von in Federnestern am Ventilfänger 2 angeordneten Spiralfedern 11 federbelastet. Die Spiralfedern 11 drücken somit die Dichtringe 5 gegen den Ventilsitz 3. Während der Ringöffnungsbewegung werden die Dichtringe 5 durch den anstehenden Gasdruck entgegen der Kraft der Spiralfedern 11 vom Ventilsitz 3 abgehoben. Anstelle der Spiralfedern 11 könnten in bekannter Weise aber auch Federplatten vorgesehen sein oder es könnte die Befederung auch durch aus einer Synchronplatte heraus gebogene federnde Arme erfolgen.

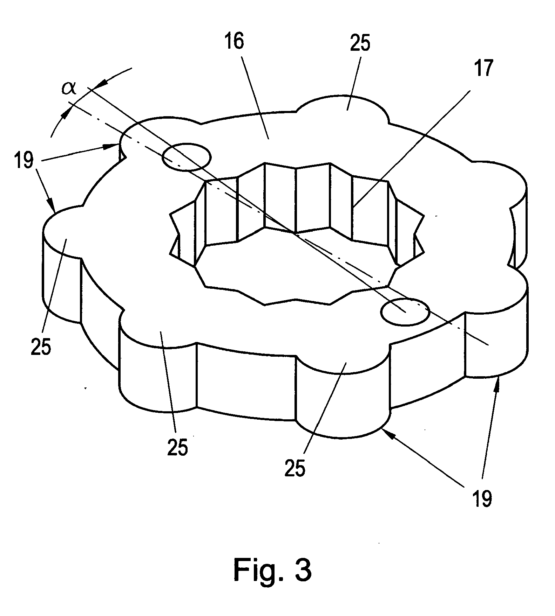

Um zu verhindern, dass sich der Abhebegreifer 22 gegenüber dem Ventilsitz 3 verdreht, da dadurch die Abhebegreiferfinger 21 an den radialen Stegen zwischen den Durchgangskanälen 13 anliegen und reiben könnten, was zu einem erhöhten Verschleiß und/oder einer Beschädigung der Abhebegreiferfinger 21 und/oder des Ventilsitzes 3 führen kann, ist eine Abhebegreiferverdrehsicherung vorgesehen. Diese besteht erfindungsgemäß aus einer Verdrehsicherungsscheibe 16 (siehe Fig. 3), die eine zentrale Ausnehmung 17 aufweist, die einen zur äußeren Form der Ventilmutter 10 gegengleichen Querschnitt besitzt. Die Ventilmutter 10 ist in der Regel eine Sechskantmutter, sodass der Querschnitt der Ausnehmung 17 im einfachsten Fall ebenfalls sechskantig ausgeführt ist. Die Verdrehsicherungsscheibe 16 kann so mit der zentralen Ausnehmung 17 auf die Ventilmutter 10 geschoben werden und ist auf diese Weise gegenüber dem Ventilsitz 3 aufgrund der nicht-kreisrunden Querschnitte verdrehgesichert angeordnet, da sich die Ventilmutter 10 im zusammengesetzten Zustand des Saugventils 1 nicht verdrehen sollte. Gegebenenfalls kann die Ventilmutter 10 auch eigens verdrehgesichert werden, z.B. durch geeignete Sicherungsringe.

Der Querschnitt der Ausnehmung 17 könnte aber auch feiner unterteilt sein, z.B. als Zwölfkant oder Achtzehnkant, wodurch die Verdrehsicherungsscheibe 16 mit einer feineren Winkelteilung, z.B. 30° oder 20°, auf die Ventilmutter 10 aufgeschoben werden kann. Dadurch kann auch die Winkelposition des Abhebegreifers 20 feiner eingestellt werden, was die Montage des Saugventils 1 erheblich erleichtert, da die Abhebegreiferfinger 21 ja innerhalb eines bestimmten Winkelbereichs (definiert durch die umfangsmäßige Erstreckung der Durchgangskanäle 13) angeordnet sein müssen.

Die Außenkontur der Verdrehsicherungsscheibe 16 weist einen nicht-kreisrunden Querschnitt auf und besitzt damit eine Anzahl von Anschlagflächen 19. Vorteilhaft sind am äußeren Umfang der Verdrehsicherungsscheibe 16 eine Anzahl von radial vorstehenden Ausbuchtungen 25 vorgesehen. Bevorzugt wird für die Anzahl der Anschlagflächen 19 eine ungerade Zahl gewählt, da sich dann in Kombination mit einer geraden Teilung der Ausnehmung 17 eine höhere Anzahl von Verstellmöglichkeiten des Abhebegreifers 20 ergibt. Ebenso ist es vorteilhaft, die Teilung der Ausnehmung 17 und die Teilung der Anschlagflächen 19 um einen Winkel α, z. B. 1°, versetzt zueinander anzuordnen, wie in Fig. 3 angedeutet. Das wird z.B. dadurch erreicht, indem eine Symmetrieachse der geraden Teilung der Ausnehmung 17 (z.B. ein Zwölfkant) gegenüber einer Symmetrieachse einer Ausbuchtung 25 um den Winkel α versetzt wird. Der winkelmäßige Versatz der anderen Ausbuchtungen 25 ergibt sich dann entsprechend der Anzahl der Ausbuchtungen 25. Mit einer solchen Anordnung lässt sich für den Abhebegreifer 20 ein Einstellbereich von 2-3° in einem Bereich von ± 30° (bei einer Ausnehmung 17 in Form eines Zwölfkants) erzielen, was in der Regel ausreichend ist.

Am Abhebegreifer 20 ist an einem axialen Ende ein Verdrehsicherungsabschnitt 23 vorgesehen, bevorzugt von der Schulter 15 bis zum axialen Ende. Der Verdrehsicherungsabschnitt 23 ist mit einer zentralen Ausnehmung 24 ausgeführt, deren nicht-kreisrunder Querschnitt gegengleich zur Außenkontur der Verdrehsicherungsscheibe 16 geformt ist. Wenn die Ausbuchtungen 25 der Verdrehsicherungsscheibe 16 als Kreissegmente ausgeführt sind, kann der gegengleiche nicht-kreisrunde Querschnitt der Ausnehmung 24 einfach durch Bohren hergestellt werden. Die zentrale Ausnehmung 24 des Abhebegreifers 20 ist auf die Verdrehsicherungsscheibe 16 geschoben, womit der Abhebegreifer 20 gegenüber der Verdrehsicherungsscheibe 16, die ja wiederum selbst verdrehgesichert angeordnet ist, damit auch gegenüber den Ventilsitz 3 verdrehgesichert angeordnet ist.

Die Verdrehsicherungsscheibe 16 liegt bevorzugt axial an der Scheibe 18 an und wird mittels einer Feder 17 axial gegen diese gedrückt. Auf die Scheibe 18 kann auch verzichtet werden. In diesem Fall könnte die Verdrehsicherungsscheibe 16 an der Schulter 15 des Abhebegreifers 20 anliegen. Dazu kann am gegenüberliegenden axialen Ende des Verdrehsicherungsabschnittes 23 des Abhebegreifers 20 eine Scheibe 12 vorgesehen sein, die über einen angedeuteten Sicherungsring im Abhebegreifer 20 gehalten wird. Anstelle der Scheibe 12 kann aber im Abhebegreifer 20 auch ein anderer geeigneter Anschlag für die Feder 17 vorgesehen sein. Aufgrund dieser Anordnung kann der Abhebegreifer 20 in axialer Richtung gegen die Federkraft der Feder 17 in Richtung Ventilfänger 2 bewegt werden, wodurch das Ventilelement 4 vom Ventilsitz 3 abgehoben wird und die Durchgangskanäle 13 freigegeben werden. Die Rückstellung des Abhebegreifers 20 erfolgt dabei selbsttätig durch die Federkraft der Feder 17.

Dadurch, dass die Verdrehsicherungsscheibe 16 federbelastet ist und durch die Federvorspannung gegen die Scheibe 18 gedrückt wird, wird gleichzeitig eine zusätzliche Verdrehsicherung der Ventilmutter 10 erzielt, da die Verdrehsicherungsscheibe 16 dadurch auch ein Lösen und Aufdrehen der Ventilmutter 10 verhindert bzw. dem entgegenwirkt. Außerdem muss dadurch die Verdrehsicherung im Ventil 1 nicht eigens befestigt werden, da das die Feder 17 übernimmt.

Der nicht-kreisrunde Querschnitt der Außenkontur der Verdrehsicherungsscheibe 16 bildet zusätzlich auch eine Führung des Abhebegreifers 20 und wird dazu vorteilhaft aus einem tribologisch günstigen Material, wie aus einem Kunststoff oder einem Kunststoff mit bestimmten Füllstoffen, wie z.B. PTFE, PEEK, PPS, PEK, POM, PA, HTCX, MTX oder LTX, gefertigt. Die Verwendung von Kunststoff für die Verdrehsicherungsscheibe 16 ermöglicht auch die einfache Fertigung, z.B. in Form eines Stranggussteils, der auf die gewünschte Länge abgelängt werden kann.

Durch die Verdrehsicherungsscheibe 16 wird damit eine zusätzliche Führung des Abhebegreifers 20 geschaffen, wodurch der Abhebegreifer 20 nicht nur mit seinem Führungsabschnitt 22 auf der Führungshülse 6, sondern auch mit dem Verdrehsicherungsabschnitt 23 auf der Verdrehsicherungsscheibe 16 geführt wird. Damit kann die Führung des Abhebegreifers 20 verbessert werden, da durch die doppelte Führung eine Pendelbewegung des Abhebegreifers 20 verhindert, bzw. zumindest reduziert, wird, wodurch auch der Verschleiß am Ventilelement 4 verringert werden kann. Auf den Führungsabschnitt 22 könnte aber auch verzichtet werden, wodurch die Führung des Abhebegreifers 20 nur durch die Verdrehsicherungsscheibe 16 in Zusammenwirkung mit dem Verdrehsicherungsabschnitt 23 erfolgen würde.

## Patentansprüche

1. Saugventil mit einem Ventilsitz (3) und einem Ventilfänger (2), zwischen denen ein Ventilelement (4) hin- und herbeweglich angeordnet ist, wobei der Ventilsitz und der Ventilfänger durch einen Ventilbolzen und eine auf den Ventilbolzen aufgeschraubte Ventilmutter zusammengehalten sind, und mit einem Abhebegreifer (20) mit einer Anzahl von Abhebegreiferfingern (21), die durch Durchgangskanäle (13) im Ventilsitz (3) durchgreifen und am Ventilelement (4) anliegen, wobei der Abhebegreifer (20) mittels einer Abhebegreiferverdrehsicherung gegenüber dem Ventilsitz (3) verdrehgesichert angeordnet und in axialer Richtung geführt ist, **dadurch gekennzeichnet, dass** die Abhebegreiferverdrehsicherung als Verdrehsicherungsscheibe (16) ausgeführt ist, an der eine zentrale Ausnehmung (17) mit einem zur Ventilmutter (10) gegengleichen, nicht-kreisrunden Querschnitt vorgesehen ist und die Verdrehsicherungsscheibe (16) mit ihrer zentralen Ausnehmung (17) verdrehgesichert auf der Ventilmutter (10) angeordnet ist und dass die Außenkontur der Verdrehsicherungsscheibe (16) einen nicht kreisrunden Querschnitt aufweist und am Abhebegreifer (20) eine zentrale Ausnehmung (24) mit einer zur Außenkontur gegengleichen Innenkontur vorgesehen ist und der Abhebegreifer (20) mit seiner zentralen Ausnehmung (24) auf der Verdrehsicherungsscheibe (16) angeordnet ist.

2. Saugventil nach Anspruch 1, **dadurch gekennzeichnet, dass** am Abhebegreifer (20) ein Führungsabschnitt (22) vorgesehen ist und der Abhebegreifer (20) mit dem Führungsabschnitt (22) an einer Führungshülse (6) geführt ist.

3. Saugventil nach Anspruch 1 oder 2, **dadurch gekennzeichnet, dass** am äußeren Umfang der Verdrehsicherungsscheibe (16) eine Anzahl von radial vorstehenden Ausbuchtungen (25), vorzugsweise in Form von Kreissegmenten, vorgesehen sind.

4. Saugventil nach Anspruch 3, **dadurch gekennzeichnet, dass** die durch den nicht-kreisrunden Querschnitt entstehende Teilung der Ausnehmung (17) und die durch die Anzahl der Ausbuchtungen (25) entstehende Teilung der Ausbuchtungen (25) um einen Winkel (α) versetzt zueinander angeordnet sind.

5. Saugventil nach einem der Ansprüche 1 bis 4, **dadurch gekennzeichnet, dass** im Abhebegreifer (20) eine Feder (7) vorgesehen ist, die mit einem Ende an der Verdrehsicherungsscheibe (16) und mit dem anderen Ende an einem Anschlag im Abhebegreifer (20) anliegt.

## Claims

1. A suction valve comprising a valve seat (3) and a valve guard (2) between which a valve element (4) is arranged in a reciprocating manner, wherein the valve seat and the valve guard are held together by a valve bolt and a valve nut screwed onto said valve bolt, and further comprising an unloader (20) having a plurality of unloader fingers (21) which reach through passage channels (13) in the valve seat (3) and rest against the valve element (4), wherein the unloader (20) is arranged in a non-rotational manner with respect to the valve seat (3) and is guided in the axial direction by means of an anti-rotation lock for the unloader, **characterized in that** the anti-rotation lock for the unloader is designed as an anti-rotation locking disk (16) on which a central recess (17) is provided that has a diametrically opposed non-circular cross section matched to the valve nut (10), and the anti-rotation locking disk (16) is arranged with its central recess (17) in a non-rotational manner on the valve nut (10), **and that** the outer contour of the anti-rotation locking disk (16) has a non-circular cross-section and a central recess (24) is provided on the unloader, wherein said central recess has an inner contour diametrically opposed and matched to the outer contour, and the unloader (20) is arranged with its central recess (24) on the anti-rotation locking disk (16).

2. The suction valve according to claim 1, **characterized in that** a guide section (22) is provided on the unloader (20) and the unloader (20) is guided with the guide section (22) on a guide sleeve (6).

3. The suction valve according to claim 1 or claim 2, **characterized in that** a number of radially projecting protrusions (25), preferably in the form of segments of a circle, is provided on the outer circumference of the anti-rotation locking disk (16).

4. The suction valve according to claim 3, **characterized in that** the partition of the recess (17) resulting from the non-circular cross-section and the partition of the protrusions (25) resulting from the number of the protrusions (25) are offset to each other by an angle (α).

5. The suction valve according to any one of the claims 1 to 4, **characterized in that** a spring (7) is provided in the unloader (20), wherein said spring rests with one end against the anti-rotation locking disk (16) and with the other end against a limit stop in the unloader (20).

## Revendications

1. Soupape d'aspiration comportant un siège de soupape (3) et un boîtier de soupape (2) entre lesquels un élément de soupape (4) est disposé mobile en mouvement alternatif, le siège de soupape et le boîtier de soupape étant maintenus assemblés au moyen d'un axe de soupape et d'un écrou de soupape vissé sur l'axe de soupape, et comprenant une griffe de décollement (20) dotée d'une pluralité de doigts de griffe de décollement (21) qui traversent des canaux de passage (13) formés dans le siège de soupape (3) et qui sont en contact avec l'élément de soupape (4), la griffe de décollement (20) étant disposée arrêtée en rotation par rapport au siège de soupape (3) au moyen d'un organe d'arrêt de rotation de griffe de décollement et guidée dans la direction axiale, **caractérisée par le fait que** que l'organe d'arrêt de rotation de la griffe de décollement est constitué par un disque d'arrêt de rotation (16) sur lequel est prévu un évidement central (17) ayant une section non circulaire, complémentaire de l'écrou de soupape (10), que le disque d'arrêt de rotation (16) est disposé sur l'écrou de soupape (10) arrêté en rotation par son évidement central (17), que le contour extérieur du disque d'arrêt de rotation (16) présente une section transversale non circulaire, que sur la griffe de décollement (20) est prévu un évidement central (24) ayant un contour intérieur complémentaire dudit contour extérieur, et que la griffe de décollement (20) est emboîtée par son évidement central (24) sur le disque d'arrêt de rotation (16).

2. Soupape d'aspiration selon la revendication 1, **caractérisée par le fait que** sur la griffe de décollement (20) est prévu un segment de guidage (22) et que la griffe de décollement (20) est guidée par le segment de guidage (22) sur une douille de guidage (6).

3. Soupape d'aspiration selon l'une des revendications 1 ou 2, **caractérisée par le fait que** sur la périphérie extérieure du disque d'arrêt de rotation (16) sont prévues plusieurs protubérances (25) en saillie radiale et ayant de préférence la forme de segments de cercle.

4. Soupape d'aspiration selon la revendication 3, **caractérisée par le fait que** le pas de l'évidement (17) formé par la section non circulaire et le pas des protubérances (25) formé par les différentes protubérances (25) sont décalés l'un par rapport à l'autre d'un angle (α) .

5. Soupape d'aspiration selon l'une des revendications 1 à 4, **caractérisée par le fait que**, dans la griffe de décollement (20), est disposé un ressort (7) qui est appuyé par une extrémité contre le disque d'arrêt de rotation (16) et par l'autre extrémité contre une butée formée dans la griffe de décollement (20).
